# EUROPEAN PATENT SPECIFICATION

(11) **EP 3 076 221 B1**
(45) Date of publication and mention of the grant of the patent: **07.06.2023**
(21) Application number: 15162474.9
(22) Date of filing: 02.04.2015
(51) Int. Cl.: G02B 27/01

(54) **HYBRID HEAD-UP DISPLAY**
HYBRIDE HEAD-UP-ANZEIGE
AFFICHAGE TÊTE HAUTE HYBRIDE

(43) Date of publication of application: 05.10.2016
(73) Proprietor: Continental Automotive Technologies GmbH, 30165 Hannover (DE)
(72) Inventor: DOI, Shinobu, 221-0062 Yokohama (JP)
(74) Representative: Continental Corporation

(56) References cited:
- EP-A1- 2 618 203
- FR-A3- 2 984 533
- US-A- 5 615 023

## Description

### Field of the invention

The present invention relates to the field of automotive visual display systems. In particular, this invention relates to a head-up display, to a vehicle, and to a method for providing a head-up display.

### Background

A head-up display shows information in form of a virtual image in the line of sight. Drivers may get information such as speed, warning signals and indicator arrows for navigation without looking down to an instrument cluster or a secondary display. An important performance aspect of the head-up displays is the quality of the virtual image provided by a transparent screen. For a better formation of the virtual image, careful matching of a projection system to the transparent screen may be beneficial, which may require a specially designed windshield for a windshield type head-up display or a complex adjustment structure for a combiner type head-up display.

US 5, 615, 023 shows a head-up display utilizing a hologram optical device. The hologram optical device has a relief surface that requires several expensive high precision production steps.

EP 2 618 203 A1 shows a head-up display with a combiner that is completely in contact with an inner surface of a windshield of a vehicle. Optics, mirrors and other parts used to guide light from a display to the combiner must be adapted to the shape of the windshield. This requires expensive modifications at optics, mirrors and/or other parts for adaptation to different vehicle types' windshield surfaces, as well as high precision shaping of the windshields, which is expensive, too.

FR 2 984 533 A3 also shows a head-up display with a combiner that is completely in contact with an inner surface of a windshield of a vehicle.

### Summary of the invention

It is an object of the present invention to provide a head-up display with an efficient and flexible design as defined in claim 1. A method for providing a head-up display according to claim 1 is defined in claim 9.

In the following description, the term "head-up display", also referred to as a "HUD", may concern a means for providing information to a vehicle driver optically, without the driver having to move his field of view from the road significantly. The HUD may be projected directly onto the car windscreen, or alternatively it may be projected onto a combiner screen resting on top of the car dashboard, for example.

The term "combiner", or combiner HUD, may refer to a transparent screen, e.g. a small plastic screen, between the steering wheel and the windscreen for reflecting a project image to a user, such as a driver. The combiner may blend the data displayed with the scenery in a way that it appears as a virtual image in a distance of about e.g. 2 meters in front of the driver. It is noted that the combiner as outlined in the following description relates to a separate combiner used as a mirror for the information shown, instead of the windshield itself.

The term "mounting" relates to fixing two physically separate devices together by securely attaching, affixing, fastening or any other suitable ways. In other words, the transparent sheet is manufactured in a separate process, and then mounted to the windshield. For example, the transparent sheet is made in the form of a transparent plastic disc, which is then mounted on the surface of the windshield.

The term "predetermined area", also referred to as predetermined eyebox or head motion box, may relate to a three-dimensional area, within which the projected image can be viewed. In other words, the viewer, e.g. a driver, is able to view the entire projected image as long as one of the eyes is inside the predetermined area (or eyebox) .

The term "transparent", or translucent, means that the transparent sheet is clear, or transparent enough to allow light to pass through, or to allow the viewer to see though.

Exemplary embodiments of the present invention will now be described in the following, with reference to the following drawings.

### Brief description of the drawings

Fig. 1 shows a schematic side-view of an optical combiner.
Fig. 2 shows a schematic view of a further exemplary embodiment of an optical combiner.
Fig. 3 shows a schematic view of a still further exemplary embodiment of an optical combiner.
Fig. 4 shows a schematic view of an exemplary embodiment of a vehicle.
Fig. 5 shows an exemplary embodiment of a method for providing a head-up display module.

### Detailed description of the embodiments

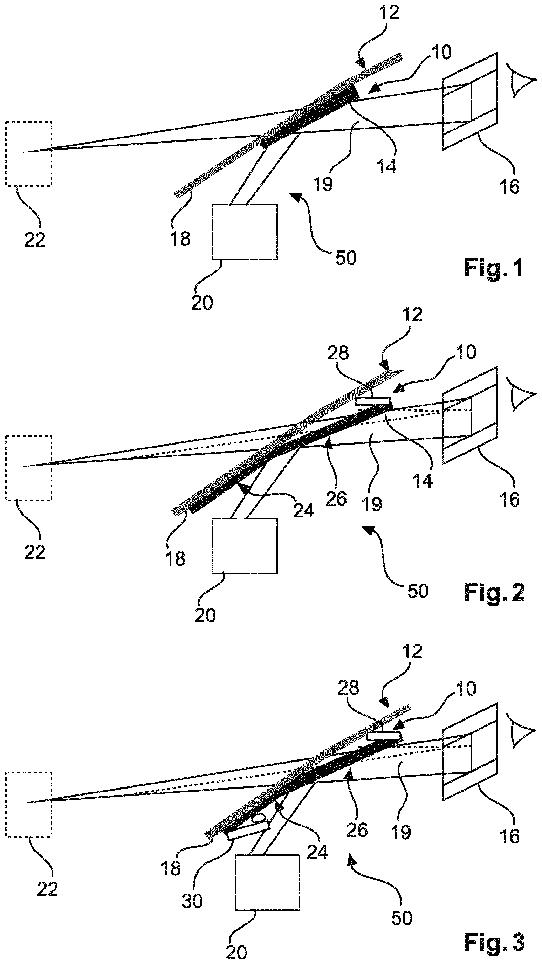

Fig. 1 shows a side-view of an optical combiner 10. Also illustrated in Fig. 1 is a windshield 12 of a vehicle - an aircraft, car, bus, motorbike or tram, for example. The optical combiner 10 comprises a transparent sheet 14, which is configured to reflect a projected image (not shown) toward a predetermined area 16, also referred to as eyebox or head motion box. The projected image may provide information like speed or navigation direction. The transparent sheet 14 is mounted on a surface 18 of the windshield 12 facing the predetermined area 16 (i.e. facing a driver-side), such that the windshield 12 provides mechanical support for the transparent sheet 14.

Also illustrated in Fig. 1 is head-up display module 50 that comprises an image projector 20 and the optical combiner

The image projector 20 may comprise a picture generation unit (not shown) for generating the projected image and an optical arrangement (also not shown), e.g. a series of fold mirrors, for deflecting the projected image to the optical combiner 10.

It will be noted that the windshield 12 may merely be a mechanical support for the transparent sheet 14 of the optical combiner 10, and does not need to be integrated in an optical path 19 to aid the formation of a virtual image 22 containing the information like speed in front of a driver. Instead, the optical path 19 is positioned in the optical combiner 10 - or, more precisely, the transparent sheet 14. In other words, for optimizing the reflection of the projected image, the transparent sheet 14 may be adjusted without the need of careful matching of an image projector 22 to the curvature of the windshield. In case of a minor or large variation of the windshield shape, the transparent sheet 14 may be redesigned (e.g. by changing the shape or surface curvature) without the need of developing a new image projector 20, such as new fold mirrors for realigning the optical path 19. Furthermore, the transparent sheet 14 is provided as an additional mirror in front of the windshield 12 to show the information. Compared with windshield type head-up displays, the additional transparent sheet 14 may be cost-effective as it only requires a small plastic or glass transparent sheet in order to fulfill the optical requirements for adequately reflecting the light. On the other hand, windshield type head-up displays may require accurate control of the plastic or glass surface quality during the windshield production process so as not to distort the virtual image, which may be difficult and expensive.

In an embodiment, a part of the transparent sheet 14 is attached to the surface 18 of the windshield 12 an adhesive medium (not shown) arranged between the transparent sheet 14 and the surface of the windshield 12.

The term "adhesive medium" may relate to any substance applied to the surfaces of the transparent sheet and the windshield that binds them together and resists separation. The adhesive medium is optically transparent and has a refractive index of approximately 1.5 to minimize the reflection losses between the transparent sheet and the windshield, thus allowing a driver to clearly see the visual image as well as the outside scenery. In an example, the adhesive medium is an optical bonding material, such as optically clear fluid that cures. In a further example, the adhesive medium is a transparent plastic sheet that works like a double sided tape to hold the transparent sheet against the windshield. It should be noted that the transparent sheet may be detachable from the windshield, e.g. by applying certain force to the attached transparent sheet. In other words, the attached transparent sheet may be removed from the windshield for replacement, for example.

As an option that is not part of the invention, shown in Fig. 1, the entire transparent sheet 14 is attached to the surface 18 of the windshield 12. As a further option, also shown in Fig. 1, the transparent sheet 14 is shaped for reflecting the projected image to the predetermined area 16. Therefore, for a slight variation of the shape of the windshield, the transparent sheet 10 may be shaped, e.g. by varying the thickness, to keep the optical path 19 invariant, thus reducing the need of tuning the image projector 20 or adjusting the optical geometry. This may allow higher volume of standard head-up display parts, e.g. image projector, and reduce manufacturing and assembling costs. Additionally, this may also make the optical combiner easier to integrate in vehicles with windshields having slight shape variations.

Optionally, the transparent sheet 14 may also have a wedge-shaped thickness profile configured for double image cancelling. The term "double image", also referred to as double image effect, relates to the formation of a brighter main image and a "ghost image" with less brightness (separated from each other with an offset) as a result of the reflection of two parallel surfaces of the transparent sheet of the optical combiner, which reduces the legibility of the projected image, such as symbols, presented to a viewer, e.g. a driver. The wedge-shaped profile of the transparent sheet of the optical combiner is capable of moving the ghost image in the same position as the main image (or at least move the ghost image closer to the main image) as seen from the viewer's position. In other words, the offset between the main image and the ghost image is reduced such that the main image and the ghost image (or at least a large part of the two images) overlap.

Fig. 2 shows an exemplary embodiment, in which a part of the transparent sheet 14 is attached to the surface 18 of the windshield 12. In other words, the transparent sheet 14 comprises an attached part 24 and an unattached part 26.

The unattached part 26 is separated from the windshield 12 by a spacer 28. The spacer 28 may be a part of the combiner that protrudes to form an air space between the combiner and the wind shield. The spacer 28 may also be a separate component, such as a clear plastic or glass material, arranged between the transparent sheet and the windshield. The spacer 28 may not be optical transparent or clear, if it is arranged in a position that does not block the sight of a driver. For example, the spacer 28 may be a thin matt black material, which may also be used to absorb reflected light between the surfaces of the transparent sheet 14 and the windshield 12.

The unattached part 26 is used as a display for reflecting the projected image. As the unattached part 26 is independent from the geometry, angle, as well as the surface curvature of the windshield 12, it functions like a separate mirror, which makes it possible to build not only compact but also extremely flat reflector. As the unattached part 26 is independent from the windshield 12, it also makes it easier to adjust, for example, the shape as well as the angle (with respect to the windshield) of the transparent sheet 14, for better adapting to windshields with various shapes. Advantageously, no new optics, e.g. mirrors, may be developed even for a large variation of the windshield shape.

Optionally, as shown in Fig. 2, the transparent sheet 14 may be shaped for fine tuning the optical geometry to optimize the reflected image (or the virtual image).

As a further option to the embodiments in Fig. 1 and Fig. 2, the part of the transparent sheet 14 that is mounted on the surface 18 is attached to the surface 18 of the windshield by optical bonding.

The term "optical bonding" relates to the use of an optical-grade adhesive, such as silicone, epoxy, and polyurethane, to glue the combiner to the surface of the windshield, which eliminates the air gap between the combiner and the windshield without disturbing the view of the road scenery. For example, optically clear fluid, or liquid optically clear adhesive, can be used to bind the transparent sheet to the windshield.

Moreover, anti-reflective coating may be applied to the transparent sheet for further reducing the reflection of sunlight, which may cause a mirror-image on the display.

Fig. 3 shows an exemplary embodiment, in which the optical combiner 10 further comprises an attachment device 30 (in a schematic view), which is configured to press at least a part of the transparent sheet 14 against the windshield 12.

The term "attachment device" relates to any appropriate device that provides pressing (or pushing) force or pressure to hold the transparent sheet on the windshield. For example, the attachment device may be (transparent) clips, which can keep the transparent sheet in place. Depending on the application, the attachment device may securely fix the transparent sheet on the windshield, or provide additional mechanical support to the attached transparent sheet (e.g. by optical bonding) to reduce the chance of the combiner detaching or flying off the windshield in case of an accident.

In an example, the optical combiner 10 is mechanically pressed against the windshield 12, and therefore may be detached from the windshield 12 for replacement. This may make it easier for post processing purposes, for example, for applying a special coating (e.g. anti-glare, anti-reflective, defogging), or for upgrading the optical combiner with special functions like polarized sunglass viewing and bright images. In a further example, the optical combiner 10 is attached to the windshield 12 by using an adhesive transparent plastic sheet that binds the optical combiner to the windshield. The optical combiner 10 is further mechanically pressed against the windshield 12 for safety measures.

In a further embodiment, shown in Fig. 3 as an option, the transparent sheet 14 has a constant thickness (or a flat geometry) . At least a part of the transparent sheet 14 has a surface curvature configured to be different from a surface curvature of the windshield 12 and for reflecting the projected image to the predetermined area 16.

Advantageously, the curved unattached part 26 may be used to refocus the projected image from the image projector 20. Additionally, providing a curved surface that is not completely attached to the wind shield may be beneficial for both SUV (Sport Utility Vehicle) type vehicle and sport type vehicle, where the angle of the windshield may be completely different from the desired optical reflection angle. For these types of vehicles, if the combiner is entirely or completely attached to the windshield, the thickness of the combiner may be required to be large enough in order to achieve the desired optical reflection angle for reflecting the projected image to the predetermined eyebox. The large thickness, however, may result in large optical distortion through the combiner. Furthermore, the thick edges at the frame area of the combiner may also create a large distortion area that masks or hides the outside scenery. Hence, an unattached curved surface may make the construction not only compact but also flexible, which may also make it easier to integrate in SUV and sporty vehicles.

The transparent sheet 14 may optionally have a special coating for altering the reflectivity of the parallel surfaces of the transparent sheet 14, which can increase the brightness of the main virtual image and reduce the brightness of the ghost image. This may further increase the quality of the virtual image and enhance the legibility of the symbols presented to the driver.

If desired, the transparent sheet 14 of the optical combiner 10 in the above-described embodiments may have special functions including, for example, polarized sunglass viewing, anti-glare, anti-reflective, defogging, and the like.

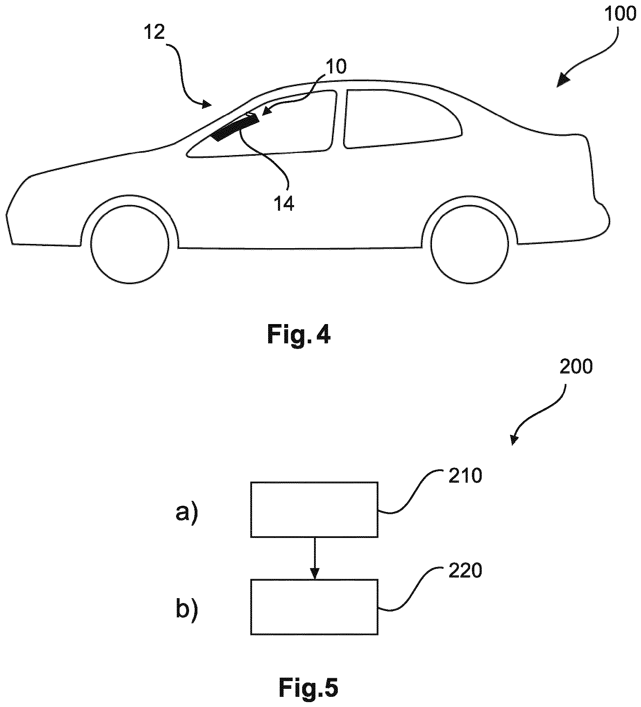

Fig. 4 shows an exemplary embodiment of a vehicle 100 comprising the head-up display module 50.

According to the invention, a part of the transparent sheet 14 is attached to the windshield 12, while the other part of the transparent sheet is unattached and may be used as a reflector (or mirror) to reflect the projected image to a driver.

Fig. 5 shows an exemplary embodiment of basic method steps of a method 200 for providing a head-up display module for a transparent sheet.

In a first step 210, also referred to as step a), an optical combiner is provided that comprises a transparent sheet configured to reflect a projected image toward a predetermined area.

In a second step 220, also referred to as step b), the transparent sheet is mounted on a surface of the transparent substrate such that the transparent substrate provides mechanical support for the transparent sheet.

The term "transparent substrate" may refer to a window (e.g. a front window or a windshield) of a vehicle, such as an aircraft, car, bus, motorbike or tram. The term "transparent substrate" may also refer to a window of a lift or an elevator, e.g. a sightseeing elevator.

Therefore, the term "projected image" may refer to the image projected to the combiner screen of a vehicle, which image may contain navigation information and the vehicle's current speed. In addition, projected image may incorporate current speed limits and other local traffic regulations, provided optionally by a camera-based traffic sign recognition system. The term "projected image" may also refer to the image projected to the combiner screen of an elevator, which image may contain current height, speed of the elevator, or information about local attractions.

It has to be noted that embodiments of the present invention are described with reference to different subject-matters. In particular, some embodiments are described with reference to method type claims, whereas other embodiments are described with reference to the device type claims.

However, a person skilled in the art will gather information from the above and the foregoing description that, unless otherwise notified, in addition to any combination of features belonging to one type of subject-matter also any combination between features relating to different subject-matters is considered to be disclosed within this application.

However, all features may be combined providing synergetic effects that are more than the simple summation of the features.

While the present invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single element or unit may fulfill the functions of several items recited in the claims.

The mere fact that certain measures are recited in mutually different dependent claims does not indicate that a combination of these measures cannot be used to advantage. Any reference signs in the claims should not be construed as limiting the scope.

## Claims

1. Head-up display for a vehicle comprising:
a windshield (12);
an image projector (20); and
an optical combiner (10);
wherein the image projector (20) is configured to project an image toward the optical combiner (10); and
wherein the optical combiner (10) is configured to reflect the projected image toward a predetermined area (16),
the optical combiner (10) comprising
a transparent sheet (14);
wherein the transparent sheet (14) comprises a first part (24) that is attached to the windshield (12) and a second part (26) that is unattached to the windshield (12),
wherein the second part (26) is configured to reflect a projected image toward a predetermined area (16);
wherein the first part (24) of the transparent sheet (14) is mounted on a surface (18) of the windshield facing the predetermined area (16), such that the windshield (12) provides mechanical support for the transparent sheet (14) ; and
wherein the second part (26) of the transparent sheet (14) is provided with a spacer (28) being arranged distant from the first part (24) and being provided for forming an air space between combiner (10) and windshield (12).

2. Head-up display according to claim 1, wherein the first part (24) of the transparent sheet (14) is provided for being attached to the surface (18) of the windshield (12) by an adhesive medium arranged between the first part (24) and the surface of the windshield (12).

3. Head-up display according to claim 2, wherein the first part (24) of the transparent sheet (14) is provided for being attached to the surface (18) of the windshield (12) by optical bonding.

4. Head-up display according to claim 1, further comprising:
an attachment device (30);
wherein the attachment device (30) is configured to press the first part (24) of the transparent sheet (14) against the windshield (12).

5. Head-up display module according to one of the preceding claims, wherein the transparent sheet (14) has a constant thickness; and
wherein the first part (24) of the transparent sheet (14) has a surface curvature matching a surface curvature of the windshield (12).

6. Head-up display according to one of the preceding claims, the spacer (28) protruding from the second part (26).

7. Head-up display according to one of the preceding claims 1 to 5, the spacer (28) being a separate component arranged between the transparent sheet (14) and the windshield (12) .

8. A vehicle (100), comprising a head-up display according to one of the preceding claims.

9. A method (200) for providing a head-up display according to one of claims 1 to 7, comprising the following steps:
a) providing (210) an optical combiner comprising a transparent sheet (14) comprising a first part (24) and a second part (26), wherein the second part (26) is configured to reflect a projected image toward a predetermined area, and wherein the first part (24) is provided for being mounted on a surface (18) of the windshield (12) facing a predetermined area (16); and
b) mounting (220) the first part (24) of the transparent sheet (14) on a surface of the windshield (12) such that the windshield (12) provides mechanical support for the transparent sheet and such that the second part (26) is unattached to the windshield (12).

## Patentansprüche

1. Head-up-Anzeigevorrichtung für ein Fahrzeug, aufweisend:
eine Windschutzscheibe (12);
einen Bildprojektor (20); und
einen optischen Kombinierer (10);
wobei der Bildprojektor (20) dazu ausgebildet ist, ein Bild auf den optischen Kombinierer (10) zu projizieren; und
wobei der optische Kombinierer (10) dazu ausgebildet ist, das projizierte Bild auf einen vorbestimmten Bereich (16) zu reflektieren,
wobei der optische Kombinierer (10) eine transparente Folie (14) aufweist;
wobei die transparente Folie (14) einen ersten Teil (24), der an der Windschutzscheibe (12) befestigt ist, und einen zweiten Teil (26), der nicht an der Windschutzscheibe (12) befestigt ist, umfasst,
wobei der zweite Teil (26) dazu ausgebildet ist, ein projiziertes Bild auf einen vorbestimmten Bereich (16) zu reflektieren;
wobei der erste Teil (24) der transparenten Folie (14) auf einer dem vorbestimmten Bereich (16) zugewandten Oberfläche (18) der Windschutzscheibe so angebracht ist, dass die Windschutzscheibe (12) eine mechanische Stütze für die transparente Folie (14) vorsieht; und
wobei der zweite Teil (26) der transparenten Folie (14) mit einem Abstandshalter (28) versehen ist, der von dem ersten Teil (24) beabstandet angeordnet ist und zur Bildung eines Luftraums zwischen dem Kombinierer (10) und der Windschutzscheibe (12) vorgesehen ist.

2. Head-up-Anzeigevorrichtung gemäß Anspruch 1, wobei der erste Teil (24) der transparenten Folie (14) zum Befestigen an der Oberfläche (18) der Windschutzscheibe (12) durch ein zwischen dem ersten Teil (24) und der Oberfläche der Windschutzscheibe (12) angeordnetes Klebemittel vorgesehen ist.

3. Head-up-Anzeigevorrichtung gemäß Anspruch 2, wobei der erste Teil (24) der transparenten Folie (14) dazu vorgesehen ist, durch optisches Kleben an der Oberfläche (18) der Windschutzscheibe (12) befestigt zu werden.

4. Head-up-Anzeigevorrichtung gemäß Anspruch 1, ferner aufweisend:
eine Befestigungsvorrichtung (30);
wobei die Befestigungsvorrichtung (30) dazu ausgebildet ist, den ersten Teil (24) der transparenten Folie (14) gegen die Windschutzscheibe (12) zu drücken.

5. Head-up-Anzeigemodul gemäß einem der vorhergehenden Ansprüche, wobei die transparente Folie (14) eine konstante Dicke aufweist; und
wobei der erste Teil (24) der transparenten Folie (14) eine Oberflächenkrümmung aufweist, die mit einer Oberflächenkrümmung der Windschutzscheibe (12) übereinstimmt.

6. Head-up-Anzeigevorrichtung gemäß einem der vorhergehenden Ansprüche, wobei der Abstandshalter (28) aus dem zweiten Teil (26) herausragt.

7. Head-up-Anzeigevorrichtung gemäß einem der vorhergehenden Ansprüche 1 bis 5, wobei der Abstandshalter (28) als separate Komponente zwischen der transparenten Folie (14) und der Windschutzscheibe (12) angeordnet ist.

8. Fahrzeug (100), aufweisend eine Head-up-Anzeigevorrichtung gemäß einem der vorhergehenden Ansprüche.

9. Verfahren (200) zum Bereitstellen einer Head-up-Anzeigevorrichtung gemäß einem der Ansprüche 1 bis 7, aufweisend die folgenden Schritte:
a) Bereitstellen (210) eines optischen Kombinierers, der eine transparente Folie (14) aufweist, die einen ersten Teil (24) und einen zweiten Teil (26) aufweist, wobei der zweite Teil (26) dazu ausgebildet ist, ein projiziertes Bild auf einen vorbestimmten Bereich zu reflektieren, und wobei der erste Teil (24) dazu vorgesehen ist, an einer einem vorbestimmten Bereich (16) zugewandten Oberfläche (18) der Windschutzscheibe (12) angebracht zu werden; und
b) Anbringen (220) des ersten Teils (24) der transparenten Folie (14) an einer Oberfläche der Windschutzscheibe (12) so, dass die Windschutzscheibe (12) eine mechanische Stütze für die transparente Folie bietet und der zweite Teil (26) nicht an der Windschutzscheibe (12) befestigt ist.

## Revendications

1. Affichage tête haute pour un véhicule comprenant :
un pare-brise (12) ;
un projecteur d'images (20) ; et
un combineur optique (10) ;
dans lequel le projecteur d'images (20) est configuré pour projeter une image en direction du combineur optique (10) ; et
dans lequel le combineur optique (10) est configuré pour réfléchir l'image projetée en direction d'une zone prédéterminée (16),
le combineur optique (10) comprenant
une feuille transparente (14) ;
dans lequel la feuille transparente (14) comprend une première partie (24) qui est fixée au pare-brise (12) et une seconde partie (26) qui n'est pas fixée au pare-brise (12),
dans lequel la seconde partie (26) est conçue pour réfléchir une image projetée en direction d'une zone prédéterminée (16) ;
dans lequel la première partie (24) de la feuille transparente (14) est montée sur une surface (18) du pare-brise faisant face à la zone prédéterminée (16), de sorte que le pare-brise (12) offre un support mécanique à la feuille transparente (14) ; et
dans lequel la seconde partie (26) de la feuille transparente (14) est munie d'une entretoise (28) disposée à distance de la première partie (24) et fournie pour former un espace d'air entre le combineur (10) et le pare-brise (12).

2. Affichage tête haute selon la revendication 1, dans lequel la première partie (24) de la feuille transparente (14) est prévue pour être fixée à la surface (18) du pare-brise (12) au moyen d'un support adhésif disposé entre la première partie (24) et la surface du pare-brise (12).

3. Affichage tête haute selon la revendication 2, dans lequel la première partie (24) de la feuille transparente (14) est prévue pour être fixée à la surface (18) du pare-brise (12) par liaison optique.

4. Affichage tête haute selon la revendication 1, comprenant en outre :
un dispositif de fixation (30) ;
dans lequel le dispositif de fixation (30) est conçu pour presser la première partie (24) de la feuille transparente (14) contre le pare-brise (12).

5. Module d'affichage tête haute selon l'une quelconque des revendications précédentes, dans lequel la feuille transparente (14) a une épaisseur constante ; et
dans lequel la première partie (24) de la feuille transparente (14) a une courbure de surface qui correspond à une courbure de surface du pare-brise (12).

6. Affichage tête haute selon l'une quelconque des revendications précédentes, dans lequel l'entretoise (28) fait saillie depuis la seconde partie (26).

7. Affichage tête haute selon l'une quelconque des revendications précédentes 1 à 5, dans lequel l'entretoise (28) est un composant séparé disposé entre la feuille transparente (14) et le pare-brise (12).

8. Véhicule (100), comprenant un affichage tête haute selon l'une quelconque des revendications précédentes.

9. Procédé (200) de fourniture d'un affichage tête haute selon l'une quelconque des revendications 1 à 7, comprenant les étapes suivantes :
a) la fourniture (210) d'un combineur optique comprenant une feuille transparente (14) comprenant une première partie (24) et une seconde partie (26), dans lequel la seconde partie (26) est conçue pour réfléchir une image projetée en direction d'une zone prédéterminée, et dans lequel la première partie (24) est prévue pour être montée sur une surface (18) du pare-brise (12) faisant face à une zone prédéterminée (16) ; et
b) le montage (220) de la première partie (24) de la feuille transparente (14) sur une surface du pare-brise (12) de sorte que le pare-brise (12) offre un support mécanique à la feuille transparente et de sorte que la seconde partie (26) n'est pas fixée au pare-brise (12).
